# EUROPÄISCHE PATENTANMELDUNG

(11) **EP 1 388 772 A1**
(43) Veröffentlichungstag der Anmeldung: **11.02.2004**
(21) Anmeldenummer: 03014279.8
(22) Anmeldetag: 25.06.2003
(51) Int. Cl.: G05D 1/06

(54) **Elektro-optische Führungseinrichtung für die automatische Steuerung unbemannter Fluggeräte während der Endphase der Landung**

(30) Priorität: 01.08.2002 DE 10235204
(71) Anmelder: EMT Ingenieurbüro für Elektro-Mechanische Technologien Dipl.-Ing. Hartmut Euer, 82377 Penzberg (DE)
(72) Erfinder: Euer, Hartmut, Dipl.-Ing., 82393 Iffeldorf (DE); Wernicke, Joachim, Prof. Dr.-Ing., 14167 Berlin (DE)
(74) Vertreter: Volpert, Marcus, Dr.

(57) **Zusammenfassung**

2.1. Ein infrarot-optisches Verfahren ist bekannt, das beispielsweise bei der Verfolgung fliegender Ziele durch militärische Flugkörper eingesetzt wird, wobei das durch Infrarot-Emissionen markante, fliegende Ziel in einem Richtungssensor abgebildet wird. Durch direkte Sonneneinstrahlung oder Sonnenreflexe kann es zu Fehlleitungen des verfolgenden Flugkörpers kommen. Die erfindungsgemäße elektro-optische Führungseinrichtung soll die automatische Steuerung unbemannter Fluggeräte während der Endphase der Landung einfach und betriebssicher ermöglichen.
2.2. Die elektro-optische Führungseinrichtung (2) hat eine landepunktseitige Lichtquelle (4) und eine bordseitige Richtungssensoreinrichtung (6) zum richtungsabhängigen Empfangen des von der Lichtquelle (4) emittierten Lichts (7) sowie eine Auswertungseinrichtung (8) zum Bestimmen der Raumrichtung (10) vom Fluggerät (1) zur Lichtquelle und zum Bereitstellen von Steuersignalen, gemäß denen das Fluggerät zum Landepunkt (3) steuerbar ist, wobei die Lichtquelle (4) derart ausgebildet ist, daß sie ein in bestimmter Weise zeitmoduliertes Licht (7) emittiert, und die Richtungssensoreinrichtung (6) eine auschließliche Empfindlichkeit für ein derart moduliertes Licht aufweist. Vorzugsweise ist die Richtungssensoreinrichtung (6) eine Facettenkamera (12).

## Beschreibung

Die Erfindung bezieht sich auf eine elektro-optische Führungseinrichtung für die automatische Steuerung unbemannter Fluggeräte während der Endphase der Landung.

Eine derartige Steuerung, auch Landeführung genannt, ist insbesondere in der Endphase, d. h. in einem Bereich von weniger als einem Kilometer vor dem landepunkt bzw. Bodenkontakt nicht unproblematisch und kann auch dadurch erschwert sein, daß die Landung des Fluggeräts auf einem bewegten Objekt. wie z. B. auf einem Schiff. erfolgen soll.

Aus der Praxis ist es bekannt, die Landeführung eines solchen Fluggeräts durch einen geschulten Bodenpiloten in Form einer manuellen Fernlenkung bis zum Bodenkontakt durchzuführen. Nachteilig ist dabei, daß entsprechend ausgebildetes Personal verfügbar sein muß.

Alternativ dazu ist es auch bekannt, auf die Steuerung des Fluggeräts während der Endphase der Landung überhaupt zu verzichten. In diesem Fall wird das unbemannte Fluggerät durch die weitreichende Streckennavigation in einen Bereich über dem vorgesehenen Landepunkt geführt. Sodann wird ein Fallschirm ausgelöst, mit dessen Hilfe das Fluggerät ungelenkt auf den Landepunkt sinken kann. Diese technisch einfache Lösung hat allerdings den Nachteil, daß bei der Fallschirmlandung grundsätzlich ein Restrisiko in Bezug auf Landeschäden beispielsweise durch einen ungünstigen Aufsetzpunkt, eine ungünstige Raumlage des aufsetzenden Fluggeräts sowie durch eine nicht steuerbare Horizontalgeschwindigkeit infolge Winddrift bestehen bleibt.

Aus der bemannten Zivilluftfahrt sind Verfahren zur automatischen Landeführung zu einem vorgegebenen Landepunkt analog dem UKW-Instrumentenlandesystem (ILS) bekannt. Solche Leitstrahlsysteme können anstatt mit Funkwellen auch auf der Grundlage eines optischen Leitstrahles arbeiten. Vorteilhaft ist dabei die Einfachheit der Bordausrüstung. Nachteilig ist hingegen der relativ hohe bodenseitige technische Aufwand. Hinzu kommt der systembedingte Nachteil jedes Leitstrahlsystems, daß nämlich durch die radiale/lineare Orientierung und daher durch die Kegelform des Leitstrahlfeldes dieses Leitstrahlfeld zum Ursprungspunkt, d. h. zum Landepunkt hin, zunehmend enger wird und daher eine entsprechend zunehmende Führungspräzision erfordert, um das Fluggerät im Leitstrahl halten zu können. Bei der automatischen Steuerung unbemannter Fluggeräte während der Endphase der Landung kommt erschwerend hinzu, daß sich eine solche Endphase über eine sehr kurze Flugdauer von nur wenigen Sekunden erstreckt, was überaus schnelle Reaktionen des Fluggeräts auf Führungskommandos, wie Steuersignale, erforderlich macht. Derartig schnelle Reaktionen werden in keiner anderen Flugphase unbemannter Fluggeräte benötigt.

Aus der Praxis ist ferner ein Infrarot-optisches Verfahren bekannt, das beispielsweise bei der Verfolgung fliegender Ziele durch militärische Flugkörper verwendet und nachfolgend kurz erläutert wird: Das fliegende, durch Infrarot-Emissionen markante Ziel wird mit einem zur Längsachse des verfolgenden Flugkörpers symmetrischen, analogen Vierquadranten-Richtungssensor abgebildet. Der Blickwinkelbereich eines solchen Richtungssensors ist naturgemäß allerdings begrenzt. Die Lenkung des verfolgenden Flugkörpers in das Ziel erfolgt nun dadurch, daß die Längsachse des verfolgenden Flugkörpers mit Hilfe elektronischer Mittel automatisch stets auf das Ziel ausgerichtet wird. Nachteilig ist dabei, daß vor allem bei direkter Sonneneinstrahlung oder bei Sonnenreflexen eine klare Unterscheidung zwischen dem fliegenden Ziel und dem Sonnenlicht kaum oder gar nicht mehr möglich ist. Dadurch besteht die Gefahr einer Fehllenkung des verfolgenden Flugkörpers mit allen daraus resultierenden, teilweise schwerwiegenden Folgen, wie sie in den Medien immer wieder berichtet werden.

Der Erfindung liegt die Aufgabe zugrunde, eine elektro-optische Führungseinrichtung der genannten Art zu schaffen, mit der die automatische Steuerung von unbemannten Fluggeräten während der Endphase der Landung einfach und betriebssicherer durchführbar ist.

Diese Aufgabe wird erfindungsgemäß durch eine elektro-optische Führungseinrichtung mit den Merkmalen des Patentanspruchs 1 gelöst.

Vorteilhafte Weiterbildungen sind Gegenstand der Unteransprüche.

Bei der erfindungsgemäßen elektro-optischen Führungseinrichtung ist die Lichtquelle derart ausgebildet, daß sie ein in bestimmter, vorgegebener Weise zeitmoduliertes Licht emittiert. Ferner weist die Richtungssensoreinrichtung eine ausschließliche Empfindlichkeit für ein derart moduliertes Licht auf. Da also die Richtungssensoreinrichtung nur für zeitmodulierte Lichtsignale empfindlich ist, ist eine Unterscheidung zwischen der gesuchten, zeitmodulierten Lichtquelle am vorgesehenen Landepunkt und dem nicht systematisch zeitmodulierten, allerdings in der Emission mit einem starken zeitlichen Intensitätsrauschen behafteten Sonnenlicht möglich, so daß das Sonnenlicht das jeweils durchzuführende Landeverfahren je nach Komplexität der Kodierung in der Zeitmodulation der Lichtemission kaum oder gar nicht stört und damit negativ beeinflußt. Damit ist ein Fehlleiten eines unbemannten Fluggeräts praktisch ausgeschlossen, so daß die erfindungsgemäße elektro-optische Führungseinrichtung sehr betriebssicher arbeiten kann.

Gemäß einer Weiterbildung der Erfindung weist die Lichtquelle eine Weitwinkelcharakteristik auf, emittiert die Lichtquelle ein gerichtetes oder ungerichtetes Licht und/oder ist die Lichtquelle flächenhaft aus einer großen Anzahl von Leuchtdioden gebildet. Ein solcher Aufbau der Lichtquelle aus einer Gruppierung zahlreicher einzelner Lichtquellen in Form eines Lichtquellenfeldes hat den Vorteil, daß damit eine umfangreiche Redundanz zur Gewährleistung sehr hoher betrieblicher Zuverlässigkeit selbst bei Ausfall einzelner Lichtquellenkomponenten gegeben ist. Eine solche stark redundante Anordnung zahlreicher Lichtquellenpunkte hat ferner den Vorteil, daß es für die Funktion unerheblich ist, ob ein Teil der landpunktseitigen Lichtquelle abgeschattet ist oder nicht, wie dies z. B. durch ein vorgesehenes Landenetz zum beschädigungsfreien Auffangen des anfliegenden Fluggeräts möglich ist. Ein weiterer Vorteil besteht darin, daß die landepunktseitige, insbesondere bodenseitige Lichtquelle trotz ihrer Ausdehnung dem anfliegenden Fluggerät als nahezu punktförmiges Zentrum intensiver Strahlungsemission erscheint. Auch beim Auftreten von Nebel erscheint die Lichtquelle daher über die Distanz des Landeendanfluges als ein diffuses Strahlungsfeld mit einem klar erkennbaren Zentrum. Damit ist die Funktion der Landeführung auch bei ungünstigen Witterungseinflüssen, wie z. B. bei starkem Regen oder Nebel, gewährleistet, wenngleich mit möglicherweise verminderter Reichweite. Mit zunehmender Annäherung des Fluggerätes an die Lichtquelle schwindet allerdings die Auswirkung der vorerwähnten Witterungseinflüsse. Die Weitwinkelcharakteristik der Lichtquelle ermöglicht, daß das emittierte Licht in einem weiten Bereich von der Richtungssensoreinrichtung des Fluggeräts empfangen werden kann.

Gemäß einer bevorzugten Weiterbildung der Erfindung ist die Richtungssensoreinrichtung eine Facettenkamera, insbesondere eine elektro-optische, weitwinklige, digitale Facettenkamera, die eine geometrische Anordnung zahlreicher, schmalwinkliger Facettensensorelemente aufweist. Ein derartiger Aufbau der Richtungssensoreinrichtung hat den Vorteil, daß ein stark richtungsabhängiges Empfangen des von der Lichtquelle emittierten Lichts möglich ist, woraus sich die gesuchte Raumrichtung vom Fluggerät zur Lichtquelle relativ genau bestimmen läßt.

Vorteilhafterweise ist die Facettenkamera in Flugrichtung weisend angeordnet und kugelsegmentartig, insbesondere in Form einer hexagonal sphärischen Packung, ausgebildet. Dadurch ist das von der Lichtquelle emittierte Licht in einem weiten Bereich am Fluggerät empfangbar, wodurch die Betriebssicherheit der erfindungsgemäßen Einrichtung weiter verbessert ist. Selbst wenn also nur ein oder zwei der genannten Facettensensorelemente das emittierte Licht empfangen, kann die Auswertungseinrichtung die gesuchte Raumrichtung vom Fluggerät zur Lichtquelle bestimmen und die daraus resultierenden Steuersignale zur Steuerung des Landeanflugs des Fluggeräts bereitstellen.

Vorteilhafterweise hat jedes Facettensensorelement eine optische Achse mit etwa rotationssymmetrischer, insbesondere kegelförmiger Empfindlichkeitscharakteristik, auch Empfindlichkeitskegel genannt, so daß jedes Facettensensorelement demzufolge nur in einem schmalen Raumwinkelkegel gemäß seiner geometrischen Richtungsanordnung in der Kamera empfindlich ist. Dadurch ist das richtungsabhängige Empfangen des von der Lichtquelle emittierten Lichts weiter verfeinert, so daß die gesuchte Raumrichtung exakt bestimmt und der Landeanflug präzise durchgeführt werden kann.

Gemäß einer vorteilhaften Weiterbildung der Erfindung überlappen sich die Empfindlichkeitskegel benachbarter Facettensensorelemente derart, daß das emittierte Licht der Lichtquelle gleichzeitig von mindestens drei Elementen erfaßt wird und das Auftreten "blinder" Raumwinkelbereiche ausgeschlossen ist. Dadurch kann sich vor allem in Verbindung mit der kugelsegmentartigen Ausbildung der Facettenkamera eine maximale Sensordichte bei gleichzeitiger Raumwinkelüberlappung benachbarter Sensorelemente ergeben. Dadurch ist die Betriebssicherheit der erfindungsgemäßen elektro-optischen Führungseinrichtung weiter verbessert. Sämtliche Raumwinkelbereiche sind nämlich durch die erfindungsgemäße Sensoreinrichtung abgedeckt. Dadurch ist das unbemannte Fluggerät sicher zum Landepunkt führbar bzw. steuerbar.

Gemäß einer anderen Weiterbildung der Erfindung arbeitet die Facettenkamera im infraroten Spektralbereich und weist handelsübliche Infrarot-Empfänger-Bauelemente auf. Derartige Elemente sind beispielsweise aus der Technik der Infrarot-Fernsteuerungen am Markt verfügbar, so daß die erfindungsgemäße Facettenkamera einfach aus handelsüblichen Elementen zusammengebaut werden kann. Dadurch können die Herstellungskosten der Facettenkamera in Grenzen gehalten werden.

Vorteilhafterweise bestimmt die Auswertungseinrichtung den Mittelwert der Raumrichtungen der optischen Achsen aller derjenigen Sensorelemente, insbesondere Facettensensorelemente, die das von der Lichtquelle emittierte Licht empfangen, wobei der bestimmte Mittelwert die gesuchte Raumrichtung vom Fluggerät zur Lichtquelle und damit zum Landepunkt darstellt. Aufgrund eines solchen Mittelwertes ist es möglich, das Fluggerät anhand von darauf basierenden Steuersignalen zum Landepunkt, d. h. in Richtung zur Lichtquelle zu steuern. Dabei kann die Lichtquelle bodenseitig fixiert oder bewegbar, beispielsweise auf einem Kraftfahrzeug, angeordnet sein. Die Lichtquelle kann bewegbar aber beispielsweise auch auf einem Schiff plaziert sein. Abgesehen von zickzackförmigen Regelungs-Folgebewegungen entspricht die mittlere Flugbahn bei der Verfolgung einer bewegten Lichtquelle einer gegebenenfalls asymptotischen Spiralbahn, die letztlich in die Lichtquelle mündet.

Ausführungsbeispiele des Erfindungsgegenstandes werden nachfolgend anhand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
- Fig. 1: eine schematische Seitenansicht eines unbemannten Fluggeräts während der Endphase der Landung, welches mit einer elektro-optischen Führungseinheit zur automatischen Steuerung des Fluggeräts ausgestattet ist;
- Fig. 2: schematische Schnitte quer durch Raumwinkelkegel von 19 Sensorelementen der elektro-optischen Führungseinrichtung; und
- Fig. 3: schematische Schnitte quer durch Raumwinkelkegel von 37 Sensorelementen der elektro-optischen Führungseinrichtung.

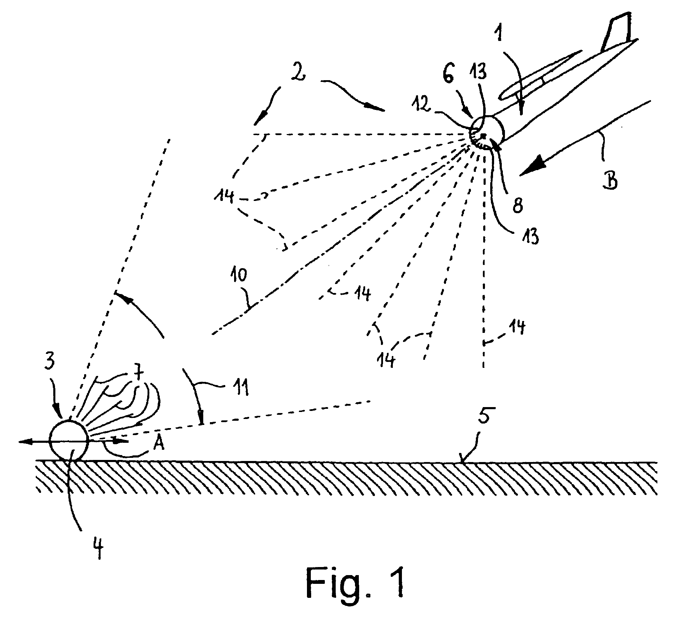

In Fig. 1 ist schematisch eine Seitenansicht eines unbemannten Fluggeräts 1 während der Endphase der Landung dargestellt. Das Fluggerät 1 ist mit einer elektro-optischen Führungseinrichtung 2 für die automatische Steuerung des unbemannten Fluggeräts während der Endphase der Landung versehen.

Die elektro-optische Führungseinrichtung 2 hat eine am Landepunkt 3 befindliche, d. h. landepunktseitige, emissionsstarke Lichtquelle 4. In dem in Fig. 1 gewählten Ausrührungsbeispiel ist die Lichtquelle 4 auf einem Boden 5 und damit bodenseitig angeordnet. Gemäß Fig. 1 ist die Lichtquelle 4 am Boden 5 auf nicht näher gezeigte Weise fixiert. Es ist aber auch möglich, den Landepunkt 3 und damit die Lichtquelle 4 auch während der Endphase der Landung des unbemannten Fluggeräts beispielsweise auf einem Kraftfahrzeug oder auf einem Schiff fortzubewegen, wie dies mit Hilfe des Doppelpfeils A in Fig. 1 schematisch angedeutet ist.

Ferner hat die elektro-optische Führungseinrichtung 2 eine an Bord des Fluggeräts 1 befindliche, d. h. bordseitige, Richtungssensoreinrichtung 6. Die Richtungssensoreinrichtung 6 dient zum richtungsabhängigen Empfangen des von der Lichtquelle 4 emittierten Lichts 7, wobei die einzelnen Lichtstrahlen in Fig. 1 der besseren Übersicht halber verkürzt dargestellt sind.

Ferner hat die elektro-optische Führungseinrichtung 2 eine gemäß dem in Fig. 1 dargestellten Ausführungsbeispiel ebenfalls an Bord des Fluggeräts 1 befindliche, d. h. bordseitige, Auswertungseinrichtung 8, die in Fig. 1 lediglich schematisch angedeutet ist. Die Auswertungseinrichtung 8 dient zum Bestimmen der Raumrichtung 10 vom Fluggerät 1 zur Lichtquelle 4 und zum Bereitstellen von Steuersignalen auf der Grundlage des von der Richtungssensoreinrichtung 6 empfangenen Lichts 7, gemäß denen das Fluggerät 1 zum Landepunkt 3 steuerbar ist.

Erfindungsgemäß ist die Lichtquelle 4 derart ausgebildet, daß sie ein in bestimmter oder vorgegebener Weise zeitmoduliertes Licht 7 emittiert, wobei die Richtungssensoreinrichtung 6 derart ausgebildet ist, daß sie eine ausschließliche Empfindlichkeit für das derart modulierte Licht aufweist.

Die Lichtquelle 4 weist gemäß Fig. 1 eine Weitwinkelcharakteristik mit einem breiten räumlichen Abstrahlungswinkel 11 auf. In der in Fig. 1 dargestellten Seitenansicht beträgt der Abstrahlungswinkel annähernd 70°. Der räumliche Abstrahlungswinkel 11 kann aber auch ±50° oder bei einer Kugelcharakteristik des emittierten Lichts auch ±180° betragen.

Die Lichtquelle 4 kann das zeitmodulierte Licht gerichtet oder ungerichtet emittieren, wobei die Zeitmodulation des Lichtes eine bestimmte Trägerfrequenz, wie z. B. 38 kHz, mit digitaler Amplitudenmodulation umfaßt. Gemäß einer bevorzugten Ausführungsform der Erfindung ist die Lichtquelle 4 flächenhaft aus einer großen Anzahl von nicht näher gezeigten Leuchtdioden gebildet. Dabei können die einzelnen Leuchtdioden in einer Ebene liegend oder aber auch kugelförmig oder teilkugelförmig, d. h. kugelsegmentartig, angeordnet sein. In praktischen Anwendungsfällen strahlt die Lichtquelle 4 vorzugsweise in die Raumrichtung, aus der das Fluggerät 1 erwartet wird. Es ist daher auch möglich, die Lichtquelle 4 schräg zum Boden 5 und in etwa senkrecht in Richtung des anfliegenden Fluggeräts 1 aufzustellen (nicht näher gezeigt).

Gemäß einer besonders bevorzugten Ausführungsform der Erfindung ist die Richtungssensoreinrichtung 6 eine sogenannte Facettenkamera 12, insbesondere eine elektro-optische, weitwinklige, digitale Facettenkamera, die eine geometrische Anordnung zahlreicher schmalwinkliger Facettensensorelemente 13 aufweist, welche in Fig. 1 lediglich schematisch angedeutet sind. Die Facettenkamera 12 ist in Flugrichtung gemäß dem Pfeil B weisend angeordnet und kugelsegmentartig, insbesondere in Form einer hexagonal sphärischen Packung, ausgebildet. Die einzelnen Facettensensorelemente 13 haben eine ausschließliche Empfindlichkeit für in vorgegebener Weise zeitmoduliert lichtemittierende Objekte (Lichtquelle 4), wobei diese lichtemittierenden Objekte das Licht passend zeitmoduliert emittieren. Die vorgenannte hexagonale sphärische Packung der einzelnen Facettensensorelemente entspricht einer sogenannten "Insektenaugen-Packung". Somit können die Facettensensorelemente kugelförmig oder teilkugelförmig, d. h. kugelsegmentartig, angeordnet sein.

Wie in Fig. 1 angedeutet, ist die Facettenkamera 12 im Bugbereich des Fluggeräts 1 fest installiert. Jedes Facettensensorelement 13 der Facettenkamera 12 hat eine optische Achse 14 mit etwa rotationssymmetrischer, insbesondere kegelförmiger Empfindlichkeitscharakteristik. Die kegelförmige Empfindlichkeitscharakteristik wird auch Empfindlichkeitskegel genannt. Demzufolge ist jedes Facettensensorelement 13 nur in einem schmalen Raumwinkelkegel gemäß seiner geometrischen Richtungsanordnung in der Facettenkamera 12 empfindlich.

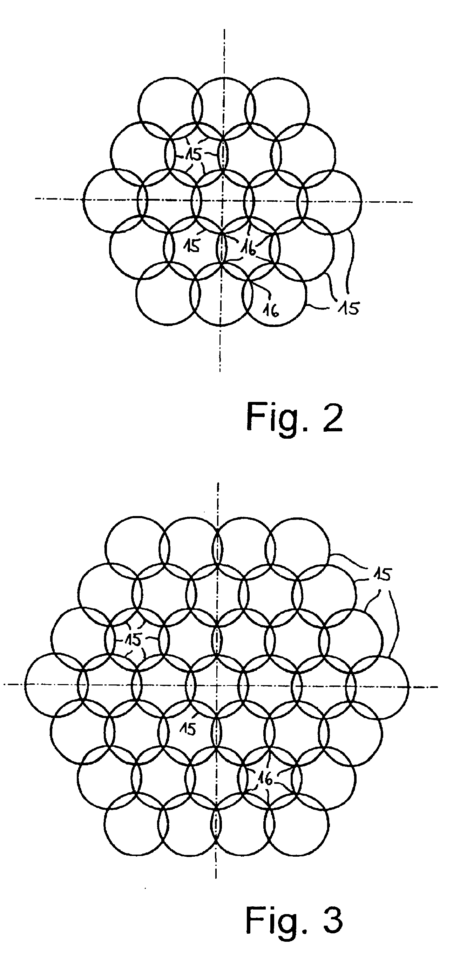

Querschnitte durch derartige Empfindlichkeitskegel oder Raumwinkelkegel 15 sind am Beispiel von 19 Sensorelementen beispielhaft in Fig. 2 dargestellt. Fig. 2 verdeutlicht daher die Anordnung der Raumrichtungen der Empfindlichkeitsmaxima und Empfindlichkeitsbereiche der einzelnen Sensorelemente der Facettenkamera, wobei um ein Sensorelement im Mittelpunkt der Anordnung in zwei regelmäßigen Sechsecken zunächst sechs Sensorelemente konzentrisch und sich nach außen hin daran anschließend zwölf Sensorelemente plaziert sind. Die Empfindlichkeitsbereiche sind also als kreisförmige Schnitte durch jeweilige Raumwinkelkegel 15 entsprechend beispielsweise eines 3-dB-Empfindlichkeitspegels der üblicherweise keulenförmigen, räumlichen Richtungscharakteristik dargestellt, so daß es sich bei den kreisförmigen Schnitten letztlich nicht um scharfe Grenzen handelt.

Wie in Fig. 2 gezeigt, überlappen sich die Empfindlichkeitskegel 15 benachbarter Facettensensorelemente 13 derart, daß das emitticrte Licht 7 der Lichtquelle 4 gleichzeitig von mindestens 3 Elementen erfaßt wird und das Auftreten "blinder" Raumwinkelbereiche ausgeschlossen ist. Da sich gemäß Fig. 2 benachbarte Empfindlichkeitskegel jeweils nur in einem etwa punktförmigen Bereich 16 schneiden, stellt die in Fig. 2 dargestellte Anordnung gewissermaßen eine Minimalkonfiguration der Empfindlichkeitskegel dar. Bei der Minimalkonfiguration überlappen sich daher benachbarte Empfindlichkeitskegel lediglich in minimaler Weise, d. h. in einem etwa punktförmigen Bereich 16.

Analoge Ausführungen gelten auch für die Anordnung gemäß Fig. 3. in der zusätzlich zu der Anordnung gemäß Fig. 2 eine weitere Anordnung nach außen hin mit einem dritten Sechseck und zusätzlichen 18 Sensorelementen dargestellt ist. Insofern umfaßt die Darstellung gemäß Fig. 2 zwei Sechseckanordnungen um einen zentralen Empfindlichkeitskegel 15, die Darstellung gemäß Fig. 3 drei Sechseckanordnungen um einen zentralen Empfindlichkeitskegel 15 jeweils in minimal überlappender Konfiguration benachbarter Empfindlichkeitskegel 15.

Es wird darauf hingewiesen, daß der Bildwinkelbereich der Facettenkamera durch Anordnung weiterer zusätzlicher Sensorelemente beliebig erweitert werden kann, im Extremfall auf die Gesamtheit aller Raumwinkel, wodurch eine solche Facettenkamera eine Kugelcharakteristik aufweisen würde. Femer kann durch die Wahl von Sensorelementen mit schmalem Empfindlichkeitskegel 15 die Bildauflösung beliebig verfeinert werden.

Gemäß einer besonders bevorzugten Ausführungsform arbeitet die Facettenkamera 12 im infraroten Spektralbereich und weist handelsübliche Infrarot-Empfänger-Bauelemente auf.

Die in Fig. 1 nicht näher gezeigte Auswertungseinrichtung 8 bestimmt den Mittelwert der Raumrichtungen der optischen Achsen 14 aller derjenigen Sensorelemente, insbesondere Facettensensorelemente 13, die das von der Lichtquelle emittierte Licht 7 empfangen, wobei der bestimmte Mittelwert die gesuchte Raumrichtung 10 vom Fluggerät 1 zur Lichtquelle 4 und damit zum Landepunkt 3 darstellt. Aufgrund der daraus resultierenden Steuersignale ist es möglich, das sich im Landeanflug befindliche Fluggerät I sicher zum Landepunkt zu führen. Es ist klar, daß die erfindungsgemäße elektro-optische Führungseinrichtung 2 die ermittelte Raumrichtung ständig neu bestimmen und gegebenenfalls korrigieren kann, so daß die Flugbahn des Fluggeräts zickzackförmige Regelungs-Folgebewegungen umfassen und bei bewegter Lichtquelle auch eine Spiralbahn beinhalten kann.

Die vorgenannten Empfindlichkeitskegel bzw. Raumwinkelkegel 15 können auch als Empfindlichkeitskeulen bezeichnet werden. In Bezug auf die Lichtquelle 4 wird darauf hingewiesen, daß die Gesamtausdehnung des durch zahlreiche Punktlichtquellen gebildeten, flächenhaften Lichtquellenfeldes den Bestimmungsfehler bei der Richtungsortung der Lichtquelle aus dem anfliegenden Fluggerät bestimmt, so daß diese daher möglichst klein gehalten werden sollte.

Nachfolgend wird die Arbeitsweise der erfindungsgemäßen elektro-optischen Führungseinrichtung näher erläutert.

Gemäß Fig. 1 befindet sich das Fluggerät 1 im Landeanflug auf die Lichtquelle 4 und damit den Landepunkt 3. Die Lichtquelle 4 sendet ein in vorgegebener Weise zeitmoduliertes Licht 7 aus, das von bestimmten Facettensensorelementen 13 der Facettenkamera empfangen wird, da die Facettenkamera eine ausschließliche Empfindlichkeit für ein derart moduliertes Licht aufweist. Aus den Raumrichtungen der optischen Achsen derjenigen Facettensensorelemente, die das emittierte Licht empfangen haben, bestimmt die Auswertungseinheit nunmehr den Mittelwert, welcher der gesuchten Raumrichtung 10 vom Fluggerät zur Lichtquelle 4 und damit zum Landepunkt 3 entspricht. Dieser Vorgang wird, so oft dies erforderlich ist, wiederholt, um das Fluggerät sicher zum Landepunkt zu führen.

Damit ist eine elektro-optische Führungseinrichtung geschaffen, welche in der Lage ist, die automatische Steuerung eines unbemannten Fluggeräts während der Endphase der Landung mit relativ einfachen Mitteln und betriebssicher durchzuführen.

## Patentansprüche

1. Elektro-optische Führungseinrichtung für die automatische Steuerung unbemannter Fluggeräte (1) während der Endphase der Landung,
mit einer am Landepunkt (3) befindlichen, d h. landepunktseitigen, emissionsstarken Lichtquelle (4),
einer an Bord des Fluggeräts (1) befindlichen, d. h. bordseitigen, Richtungssensoreinrichtung (6) zum richtungsabhängigen Empfangen des von der Lichtquelle (4) emittierten Lichts (7) und
mit einer Auswertungseinrichtung (8) zum Bestimmen der Raumrichtung (10) vom Fluggerät (1) zur Lichtquelle (4) und zum Bereitstellen von Steuersignalen auf der Grundlage des von der Richtungssensoreinrichtung (6) empfangenen Lichts (7), gemäß denen das Fluggerät (1) zum Landepunkt (3) steuerbar ist,
wobei die Lichtquelle (4) derart ausgebildet ist, daß sie ein in bestimmter Weise zeitmoduliertes Licht (7) emittiert, und
die Richtungssensoreinrichtung (6) eine ausschließliche Empfindlichkeit für ein derart moduliertes Licht (7) aufweist.

2. Elektro-optische Führungseinrichtung nach Anspruch 1, **dadurch gekennzeichnet, daß** die Lichtquelle (4) eine Weitwinkelcharakteristik aufweist, ein gerichtetes oder ungerichtetes Licht (7) emittiert und/oder flächenhaft aus einer großen Anzahl von Leuchtdioden gebildet ist.

3. Elektro-optische Führungseinrichtung nach Anspruch 1 oder 2, **dadurch gekennzeichnet, daß** die Richtungssensoreinrichtung (6) eine Facettenkamera (12), insbesondere eine elektro-optische, weitwinklige, digitale Facettenkamera, ist, die eine geometrische Anordnung zahlreicher, schmalwinkliger Facettensensorelemente (13) aufweist.

4. Elektro-optische Führungseinrichtung nach Anspruch 3, **dadurch gekennzeichnet, daß** die Facettenkamera (12) in Flugrichtung weisend angeordnet und kugelsegmentartig, insbesondere in Form einer hexagonal sphärischen Packung, ausgebildet ist.

5. Elektro-optische Führungseinrichtung nach Anspruch 3 oder 4, **dadurch gekennzeichnet, daß** jedes Facettensensorelement (13) eine optische Achse (14) mit etwa rotationssymmetrischer, insbesondere kegelförmiger Empfindlichkeitscharakteristik (Empfindlichkeitskegel) hat und demzufolge nur in einem schmalen Raumwinkelkegel (15) gemäß seiner geometrischen Richtungsanordnung in der Facettenkamera empfindlich ist.

6. Elektro-optische Führungseinrichtung nach Anspruch 5, **dadurch gekennzeichnet, daß** sich die Empfindlichkeitskegel (15) benachbarter Facettensensorelemente (13) derart überlappen, daß das emittierte Licht (7) der Lichtquelle (4) gleichzeitig von mindestens drei Elementen erfaßt wird und das Auftreten "blinder" Raumwinkelbereiche ausgeschlossen ist.

7. Elektro-optische Führungseinrichtung nach einem der Ansprüche 3 bis 6, **dadurch gekennzeichnet, daß** die Facettenkamera (12) im infraroten Spektralbereich arbeitet und handelsübliche Infrarot-Empfänger-Bauelemente aufweist.

8. Elektro-optische Führungseinrichtung nach einem der vorhergehenden Ansprüche, **dadurch gekennzeichnet, daß** die Auswertungseinrichtung (8) den Mittelwert der Raumrichtungen der optischen Achsen (14) aller derjenigen Sensorelemente, insbesondere Facettensensorelemente (13), bestimmt, die das von der Lichtquelle (4) emittierte Licht (7) empfangen, wobei der bestimmte Mittelwert die gesuchte Raumrichtung (10) vom Fluggerät (1) zur Lichtquelle (4) und damit zum Landepunkt (3) darstellt.
